# EUROPEAN PATENT APPLICATION

(11) **EP 1 271 334 A2**
(43) Date of publication of application: **02.01.2003**
(21) Application number: 02012321.2
(22) Date of filing: 04.06.2002
(51) Int. Cl.: G06F 13/40

(54) **High bandwidth storage device architecture**

(30) Priority: 13.06.2001 US 880668
(71) Applicant: LSI LOGIC CORPORATION, Milpitas, CA 95035 (US)
(72) Inventor: Henry, Russel J., Wichita, Kansas 67226 (US); Weber, Bret, Wichita, Kansas 67205 (US); Gates, Dennis E., Wichita, Kansas 67220 (US); Sherman, John, Derby, Kansas 67037 (US); Holt, Keith, Wichita, Kansas 67230 (US)
(74) Representative: Holmes, Miles

(57) **Abstract**

The present invention is directed to high bandwidth storage device controller architecture. The present invention may utilize a fabric interconnect. This may enable features such as dynamic expansion of modules, use of external memory system, scalability of memory systems and scalability and/or connectivity of array controllers to create big storage complexes.

## Description

### FIELD OF THE INVENTION

The present invention generally relates to the field of electronic storage devices, and particularly to high bandwidth storage device architecture.

### BACKGROUND OF THE INVENTION

Electronic data storage is one of the most important aspects of the modern economy. Most every aspect of modern life has some element that requires the storage of electronic data. Additionally, great advances have been made in the components utilized in information handling systems, such as desktop computers, servers, information appliances, convergence devices, and the like. For example, faster processors, network connection devices, memories, and the like are constantly available which enable components and the host system itself to provide increased functionality.

However, as host and drive interface bandwidth increases, a higher burden is placed on disk array controllers to increase bandwidth. Thus, advances made in other areas of electronic storage may not be realized due to these limitations. For example, typically, disk array controller architectures use peripheral connect interface (PCI) buses as the internal interconnect between functional areas. However, such buses may encounter limitations, such a connectivity, scalability and performance.

Therefore, it would be desirable to provide a high bandwidth disk array controller architecture.

### SUMMARY OF THE INVENTION

Accordingly, the present invention is directed to high bandwidth disk array controller architecture. The present invention may utilize a fabric interconnect, such as Infiniband. This may enable features such as dynamic expansion of modules, use of external memory system, scalability of memory systems and scalability and/or connectivity of array controllers to create big storage complexes.

In a first aspect of the present invention, an electronic data storage system includes a host interface suitable for enabling applications configuring a host system to access a fabric interconnect. A data storage interface is also include, the data storage interface suitable for enabling an electronic data storage device to access a fabric interconnect. The electronic data storage device is capable of persistent data storage. A processing system is included, the processing system suitable for performing a program of instructions. The processing system includes a channel adapter suitable for enabling the processing system to access a fabric interconnect. A memory device suitable for storage of electronic data is included. A fabric interconnect, which enables communication between the host interface, drive interface, processing system and memory, is also included.

In a second aspect of the present invention, an electronic data storage system includes a host interface, a data storage interface, a processing system, a memory device and a fabric interconnect switch. The host interface is suitable for providing an interface to a host application. The host interface includes a channel adapter capable of at least one of segmenting data into a packet and reassembling data from a packet. The data storage interface is suitable for providing an interface to an electronic data storage array capable of persistent data storage (such as a RAID array, disk array, and the like). Data included on the data storage array includes a globally unique identifier. The data storage interface includes a channel adapter capable of at least one of segmenting data into a packet and reassembling data from a packet. The processing system is suitable for performing a program of instructions, the processing system including a channel adapter capable of at least one of segmenting data into a packet and reassembling data from a packet. The memory device is suitable for storage of electronic data, the memory device including a channel adapter capable of at least one of segmenting data into a packet and reassembling data from a packet. A fabric interconnect switch is interconnected with the host interface, data storage interface, processing system and memory device, wherein the fabric interconnect switch operates as a packet-switching element.

In a third aspect of the present invention, an electronic data storage system includes a means for interfacing with a host application, a means for interfacing with an electronic data storage array, means for processing, a memory device and means for switching. The host interface means is suitable for providing an interface to a host application. The host interface means includes a channel adapter capable of at least one of segmenting data into a packet and reassembling data from a packet. The data storage interface means is suitable for providing an interface to an electronic data storage array capable of persistent data storage, wherein data included on the data storage array includes a globally unique identifier. The data storage interface means includes a channel adapter capable of at least one of segmenting data into a packet and reassembling data from a packet. The processing means is suitable for performing a program of instructions, the processing means including a channel adapter capable of at least one of segmenting data into a packet and reassembling data from a packet. The memory device is suitable for storage of electronic data, the memory device including a channel adapter capable of at least one of segmenting data into a packet and reassembling data from a packet. A switching means is interconnected with the host interface means, data storage interface means, processing means and memory device, wherein the switching means operates as a packet-switching element.

It is to be understood that both the forgoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### BRIEF DESCRIPTION OF THE DRAWINGS

The numerous advantages of the present invention may be better understood by those skilled in the art by reference to the accompanying figures in which:
FIG. 1 is a highly diagrammatic block illustration of an exemplary embodiment of the present invention wherein a high bandwidth electronic data storage device architecture utilizes an interconnect fabric to provide connectivity; and
FIGS. 2A and 2B are highly diagrammatic block illustrations of an embodiment of the present invention wherein utilizing a storage device having a fabric interconnect is shown.

### DETAILED DESCRIPTION OF THE INVENTION

Reference will now be made in detail to the presently preferred embodiments of the invention, examples of which are illustrated in the accompanying drawings.

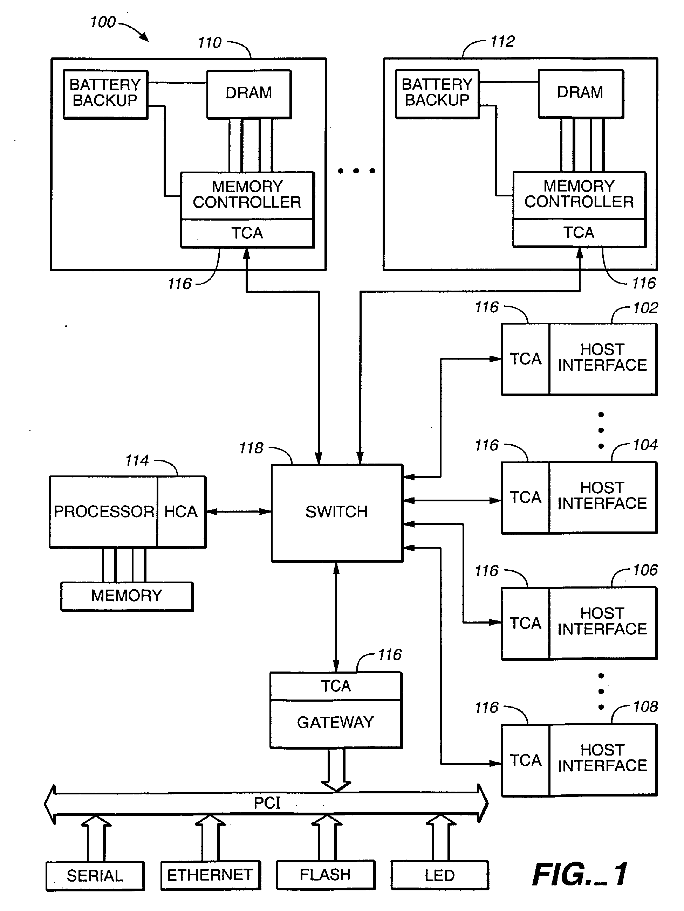

Referring generally now to FIGS. 1 through 2B, exemplary embodiments of the present invention are shown. As host and drive interface bandwidths increase, it puts a higher burned on electronic storage device controllers, such as disk array controllers, for increased bandwidth. Previous disk array controller architectures used peripheral component interconnect (PCI) as an internal interconnect between functional areas. However, such an interconnect had limitations such as connectivity, scalability and performance. By utilizing the present invention, a fabric interconnect is utilized in a electronic data storage device system, such as a disk array, to provide dynamic expansion of modules, use of external memory systems, scalability of memory systems, scalability and/or connectivity of array controllers to create larger storage complexes, and the like

Referring now to FIG. 1, an embodiment of the present invention is shown wherein a high bandwidth electronic data storage device architecture utilizes an interconnect fabric to provide connectivity. An electronic data storage device architecture 100 may include a plurality of electronic storage devices to provide data redundancy, such as a disk array arranged in a RAID array, and the like. To provide connectivity between components, the present invention may utilize a fabric interconnect.

A fabric interconnect of the present invention provides scalability by not limiting the number of host interfaces 102 & 104 and drive interfaces 106 & 108. Additionally, the number of modules in a controller 110 & 112 is not limited by the fabric like the physical limits PCI has on the number of connections to the bus.

To provide this increased functionality, the fabric interconnect may utilize messages, which in this instance is defined as a logical unit of work, to execute transactions. For example, message semantics may support memory operations such as remote direct memory access (RDMA) reads, writes, and channel operations such as send, receive, and the like.

Messages may be further segmented into packets. Data packets are an end-to-end fabric unit of transfer, e.g. packets are the routable unit of transfer. Hardware of the present invention may provide automatic message segmentation and re-assembly via packets. Packets include headers to identify the packet destination and the desired data. For example, packets may include a local route header (LRH), global route header (GRH), base transport header (BTH), extended transport header (ExTH), intermediate data, a message payload, an invariant CRC, a variant CRC, and the like.

A host channel adapter (HCA) 114 is generally a host concept configured for computing platforms. For example, a HCA may be configured for high end devices, such as nodes, memory array controllers, and the like. Functions of a HCA may include implementation of a link protocol in hardware, implement software verbs, as a RDMA engine, work queue engine, memory registration and protection, and the like as contemplated by a person of ordinary skill in the art. Thus, the HCA 114 may act to implement high-end devices in the architecture of the present invention. However, there may be implementations where the full level of functionality of an HCA is not desired, such as specialized subsystems.

Target channel adapters (TCA) 116 may be configured for specialized subsystems. TCA may be configured as simpler than HCA so that it implements what is required to minimally support fabric architecture and device-specific functionality. For example, a TCA may be configured as a work queue engine, a link protocol engine, implement transport, and the like without departing from the spirit and scope of the present invention.

To ensure packet delivery within a fabric interconnect, a switch 118 may be provided. For instance, the switch may operate as a packet-switching element within a fabric subnet. Packets may be switched, for example, based on a local identifier (LID) within the local route header (LRH) as described previously. A router, which may be though of as a superset of a switch, may also be provided to enable packet routing between systems.

Thus, by providing a fabric interconnect, a high bandwidth electronic data storage device controller architecture may be provided. For example, database transactions may be performed by using this packetization paradigm to provide dynamic expansion of modules, use of external memory systems, scalability of memory system and scalability and/or connectivity of array controllers to create larger storage complexes.

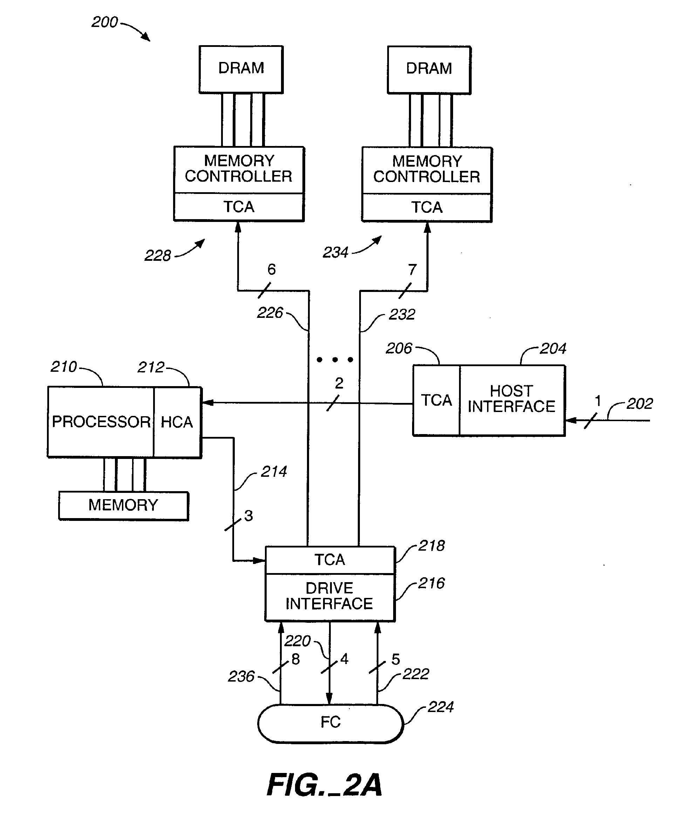

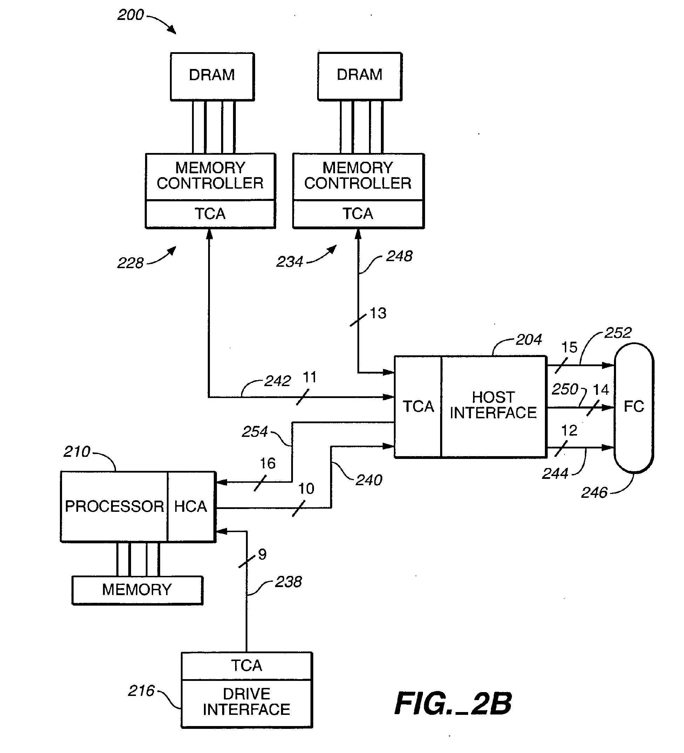

For example, referring now to FIGS. 2A and 2B, an embodiment 200 of the present invention is shown wherein a read is performed utilizing a storage device having a fabric interconnect. A request for file contents is made by an application running on a host system. Thus, a file content provide (FCP) command (FCP CMD) 202 is made to a host interface 204. The host interface 204 utilizes a target channel adapter (TCA) 206 to issue a send target command (Send(TARGET_CMD_16)) 208 to a processor 210 having a host channel adapter 212.

The processor 210 issues a send(SRP_CMD) command 214 to a drive interface 216 having a target channel adapter (TCA) 218. Identification of the data may include a global unique identifier (GUID) so the host interface 204 may identify which cache pool the data parts reside in. For example, this could be at a buffer descriptor list level, buffer descriptor level, included in header data, and the like as contemplated by a person of ordinary skill in the art. The driver interface 216 issues a file content provide command (FCP CMD) 220 and receives the file content provide data (FCP Data) from the file contents 224.

A remote direct memory access (RDMA) write 226 of the data is then performed from the drive interface 216 using the target channel adapter (TCA) 218 to memory 228 having a target channel adapter (TCA) 230. Additionally, multiple RDMA writes 232 to memory 234 may be performed based on where the data blocks are stored. The storage device 224 may then issue a file content provide response (FCP RSP) 236 to the drive interface 216 to indicate completion of the write and location of the data.

The driver interface 216 then issues a Send(SRP_RSP) response 238 indicating transfer of the data and/or location of the data to the processor 210. The processor 210 may then send(TARGET_ASSIST) 240 to the host interface 204 to inform the host interface 204 as to the location of the data. Again, identification of the data may include some type of GUID so the host interface 204 may identify which cache pool the data parts reside in, such as at the IOV list level, IOV list entry level, and the like.

RDMA reads may then be performed to obtain the data. An RDMA read may be made from memory 228 to the host interface 204 and then the file content provide (FCP) data provided 244 to arrive at the desired file contents 246. Additionally, multiple RDMA reads 248 may be utilized to provide 250 the desired file contents. Multiple RDMA reads may be used based on where the blocks of data exist in the memories 228 & 234. For example, data may exist dispersed across a disk array, and may thus require multiple accesses to obtain the data. The host interface 204 may then issue a file content provide response 252 to indicate completion of the RDMA read, and issue a Send(TARGET_RDMA_STATUS) 254 to indicate the obtaining the desired file content, any errors encountered and the like. Although an exemplary read is described, it should be apparent that a wide variety of commands and functions are contemplated by the present invention, such as writes and the like, without departing from the spirit and scope thereof.

In this way, by utilizing packets, globally unique identifiers, and the like over a fabric interconnect, a flexible, scalable and dynamic electronic data storage system may be provided. For example, multiple data storage arrays may be provided to implement a storage complex, without being limited by the previous connection restraints encountered in PCI implementations. Additionally, multiple interfaces, external memory systems and array controllers may be utilized without encountering the bandwidth bottleneck of previous interconnects. Further, a variety of fabric interconnects are contemplated by the present invention without departing from the spirit and scope thereof, such as Infiniband, RapidIO and the like.

It is believed that the high bandwidth disk array controller architecture of the present invention and many of its attendant advantages will be understood by the forgoing description. It is also believed that it will be apparent that various changes may be made in the form, construction and arrangement of the components thereof without departing from the scope and spirit of the invention or without sacrificing all of its material advantages. The form herein before described being merely an explanatory embodiment thereof. It is the intention of the following claims to encompass and include such changes.

## Claims

1. An electronic data storage system, comprising:
a host interface suitable for enabling an application configuring a host system to access a fabric interconnect;
a data storage interface suitable for enabling an electronic data storage device to access a fabric interconnect, the electronic data storage device capable of persistent data storage;
a processing system suitable for performing a program of instructions, the processing system including a channel adapter suitable for enabling the processing system to access a fabric interconnect;
a memory device suitable for storage of electronic data; and
a fabric interconnect, wherein the fabric interconnect enables communication between the host interface, drive interface, processing system and memory.

2. The electronic data storage system as described in claim 1, wherein the data storage interface is communicatively coupled to an electronic data storage array.

3. The electronic data storage system as described in claim 1, wherein the fabric interconnect includes at least one of Infiniband and RapidIO.

4. The electronic data storage system as described in claim 1, wherein the fabric interconnect includes a fabric interconnect switch.

5. The electronic data storage system as described in claim 4, wherein the fabric interconnect switch operates as a packet-switching element within the fabric interconnect.

6. The electronic data storage system as described in claim 1, wherein the host interface, data storage interface, processing system and memory include chanhel adapters.

7. The electronic data storage system as described in claim 6, wherein the channel adapters includes at least one of a host channel adapter, a target channel adapter and a remote channel adapter.

8. The electronic data storage system as described in claim 1, wherein data stored in an electronic data storage device includes a globally unique identifier (GUID), so that the host interface may identify a location of the stored data.

9. The electronic data storage system as described in claim 1, wherein data is written to the data storage device, the data including a globally unique identifier (GUID) suitable for identifying a location of the data on the fabric interconnect.

10. An electronic data storage system, comprising:
a host interface suitable for providing an interface to a host application, the host interface including a channel adapter capable of at least one of segmenting data into a packet and reassembling data from a packet;
a data storage interface suitable for providing an interface to an electronic data storage array capable of persistent data storage, wherein data included on the data storage array includes a globally unique identifier and wherein the data storage interface includes a channel adapter capable of at least one of segmenting data into a packet and reassembling data from a packet;
a processing system suitable for performing a program of instructions, the processing system including a channel adapter capable of at least one of segmenting data into a packet and reassembling data from a packet;
a memory device suitable for storage of electronic data, the memory device including a channel adapter capable of at least one of segmenting data into a packet and reassembling data from a packet; and
a fabric interconnect switch interconnected with the host interface, data storage interface, processing system and memory device, wherein the fabric interconnect switch operates as a packet-switching element.

11. The electronic data storage system as described in claim 10, wherein the fabric interconnect switch is interconnected via a fabric interconnect.

12. The electronic data storage system as described in claim 11, wherein the fabric interconnect includes at least one of Infiniband and RapidIO.

13. The electronic data storage system as described in claim 10, wherein the channel adapters includes at least one of a host channel adapter, a target channel adapter and a remote channel adapter.

14. The electronic data storage system as described in claim 10, wherein the globally unique identifier (GUID) enables the host interface to identify a location of the stored data.

15. The electronic data storage system as described in claim 14, wherein an application accessing the host interface retrieves data from the data storage array utilizing a packet over the fabric interconnect switch and data storage interface.

16. The electronic data storage system as described in claim 10, wherein data is written to the data storage array, the data including a globally unique identifier (GUID) suitable for identifying a location of the data.

17. An electronic data storage system, comprising:
a means for interfacing with a host application, the host interface means including a channel adapter capable of at least one of segmenting data into a packet and reassembling data from a packet;
a means for interfacing with an electronic data storage array, the data storage array capable of persistent data storage, wherein data included on the data storage array includes a globally unique identifier and wherein the data storage interface means including a channel adapter capable of at least one of segmenting data into a packet and reassembling data from a packet;
a means for processing, the processing means suitable for performing a program of instructions, the processing means including a channel adapter capable of at least one of segmenting data into a packet and reassembling data from a packet;
a memory device suitable for storage of electronic data, the processing system including a channel adapter capable of at least one of segmenting data into a packet and reassembling data from a packet; and
a means for switching interconnected with to the host interface, data storage interface, processing system and memory device, wherein the switching means operates as a packet-switching element.

18. The electronic data storage system as described in claim 17, wherein the switching means is interconnected via a fabric interconnect.

19. The electronic data storage system as described in claim 18, wherein the fabric interconnect includes at least one of Infiniband and RapidIO.

20. The electronic data storage system as described in claim 17, wherein the channel adapters includes at least one of a host channel adapter, a target channel adapter and a remote channel adapter.

21. The electronic data storage system as described in claim 17, wherein the globally unique identifier (GUID) enables the host interface means to identify a location of stored data.

22. The electronic data storage system as described in claim 17, wherein an application accessing the host interface means retrieves data from the data storage array utilizing a packet over the switching means and data storage interface means.

23. The electronic data storage system as described in claim 17, wherein data is written to the data storage array, the data including a globally unique identifier (GUID) suitable for identifying a location of the data.
